# FASCICULE DE BREVET EUROPEEN

(11) **EP 3 240 967 B1**
(45) Date de publication et mention de la délivrance du brevet: **04.09.2019**
(21) Numéro de dépôt: 15820552.6
(22) Date de dépôt: 31.12.2015
(51) Int. Cl.: F16L 11/08, F16L 11/20, F16L 11/22, F16L 33/01, F16L 58/00

(54) **LIGNE DESTINÉE À ÊTRE IMMERGÉE DANS UNE ÉTENDUE D'EAU ET PROCÉDÉ DE MISE EN PLACE ASSOCIÉ**
LEITUNG ZUM UNTERTAUCHEN IN EINEN WASSERKÖRPER UND ENTSPRECHENDES VERFAHREN ZUR PLATZIERUNG
LINE INTENDED TO BE SUBMERGED IN A BODY OF WATER AND ASSOCIATED PLACEMENT METHOD

(30) Priorité: 31.12.2014 FR 1463483
(43) Date de publication de la demande: 08.11.2017
(73) Titulaire: Technip France, 92400 Courbevoie (FR)
(72) Inventeur: DESAMAIS, Nicolas, 76190 Ecalles Alix (FR); RIVET, Romain, 76000 Rouen (FR); FERRAZ, Jean-Paul, 22290-290 Rio De Janeiro (BR); DAMIENS, Alexandre, 76560 Berville (FR)
(74) Mandataire: Lavoix
(86) Numéro de dépôt international: PCT/EP2015/081472
(87) Numéro de publication internationale: WO 2016/107928

(56) Documents cités:
- EP-B1- 1 255 944
- WO-A1-00/17479
- WO-A1-2011/026801
- WO-A1-2012/092931
- WO-A1-2016/079253
- FR-A1- 2 875 285
- GB-A- 2 499 379
- US-A- 4 259 553

## Description

La présente invention concerne une ligne destinée à être immergée dans une étendue d'eau selon le préambule de la revendication 1.

La ligne est notamment une conduite flexible telle que décrite dans les documents normatifs publiés par l'American Petroleum Institute (API), API 17J, et API RP17B. La conduite flexible est avantageusement de type non liée (« unbonded » en anglais).

En variante, la ligne est une ligne de production multifonctions de type « integrated production bundle », comprenant au moins un tube de transport de fluide et un ensemble de câbles électriques ou optiques propres à transporter une puissance électrique ou hydraulique ou une information entre le fond et la surface de l'étendue d'eau.

Plus généralement, la ligne est un ombilical, tel que décrit dans les documents normatifs publiés par l'American Petroleum Institute (API), API17E.

Les conduites flexibles comportent généralement une gaine externe de protection définissant un volume intérieur et au moins une gaine imperméable disposée à l'intérieur du volume intérieur.

Cette gaine imperméable est par exemple une gaine de pression délimitant un passage de circulation de fluide ou une gaine intermédiaire disposée entre la gaine de pression et la gaine externe.

Des couches d'armures de traction formées par des nappes de fils généralement métalliques sont disposées dans l'espace annulaire entre la gaine imperméable et la gaine externe, pour assurer une bonne résistance à la traction.

Dans certains cas, des composés présents dans le fluide circulant à travers la gaine de pression de la conduite diffusent vers l'extérieur jusqu'à l'espace annulaire. Ces composés comprennent par exemple de l'eau, des chlorures, du dioxyde de carbone, et du sulfure d'hydrogène.

Les armures métalliques subissent alors un phénomène de corrosion qui a pour conséquence, à plus ou moins long terme suivant la sévérité du milieu, leur affaiblissement, voire leur rupture et dans certains cas, la ruine de la conduite sous-marine.

Pour pallier ce problème, il est connu par exemple de EP 1 255 944 d'inonder volontairement un espace annulaire contenant des armures, en perçant des trous dans la gaine externe.

Dans ce cas, la résistance à la corrosion s'améliore si l'eau présente dans le milieu confiné est peu ou faiblement oxygénée. En effet, la consommation en sulfure d'hydrogène devient homogène lorsque la teneur en oxygène est faible et la corrosion d'éléments métalliques de renforcement diminue fortement.

Ceci fonctionne également si le volume de solution contenant le sulfure d'hydrogène, le dioxyde de carbone, le métal, l'oxygène est modeste par rapport à la surface des fils d'acier dans l'espace annulaire.

Toutefois, une corrosion limitée des armures persiste, notamment sous l'effet du renouvellement d'eau dans l'espace annulaire, en particulier lors des mouvements verticaux de la conduite flexible à travers l'étendue d'eau, sous l'effet de la houle et des courants. Ceci est également le cas lors des variations de pression de fluide transporté par la conduite, qui provoquent des compressions et expansions radiales successives de l'espace annulaire, et donc une circulation d'eau fraiche dans l'espace annulaire.

WO 2012/092 931 décrit une installation d'exploitation de fluide comportant une ligne immergée dans une étendue d'eau.

Un but de l'invention est de fournir une ligne qui assure une durée de service encore améliorée pour la ligne, même lorsque celle-ci est soumise à des variations de hauteur ou à des variations de pression de fluide interne.

À cet effet, l'invention a pour objet une ligne telle que décrite dans les revendications 1 à 12.

L'invention a également pour objet un procédé tel que décrit dans la revendication 13.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une première conduite flexible selon l'invention ;
- la figure 2 est une vue schématique de l'extrémité d'une première conduite flexible selon l'invention ;
- la figure 3 est une vue analogue à la figure 2 d'une deuxième conduite flexible selon l'invention ;
- la figure 4 est une vue analogue à la figure 2 d'une troisième conduite flexible selon l'invention ;
- la figure 5 est une vue analogue à la figure 2 d'une quatrième conduite flexible selon l'invention ;
- la figure 6 est une vue analogue à la figure 2 d'une cinquième conduite flexible selon l'invention ;
- la figure 7 est une vue analogue à la figure 2 d'une sixième conduite flexible selon l'invention ;
- la figure 8 est une vue analogue à la figure 2 d'une septième conduite flexible selon l'invention ;
- la figure 9 est une vue analogue à la figure 2 d'une huitième conduite flexible selon l'invention ;
- la figure 10 est une vue analogue à la figure 2 d'une neuvième conduite flexible selon l'invention ;
- la figure 11 est une vue analogue à la figure 2 d'une dixième conduite flexible selon l'invention ;
- la figure 12 est une vue analogue à la figure 2 d'une onzième conduite flexible non revendiquée ;
- la figure 13 est une vue schématique d'une douzième conduite flexible selon l'invention ;
- la figure 14 est une vue d'un détail de la conduite de la figure 13 ;
- la figure 15 est une vue analogue à la figure 13 d'une treizième conduite flexible selon l'invention.

Dans tout ce qui suit, les termes « extérieur » ou « extérieurement » et « intérieur » ou « intérieurement » s'entendent généralement de manière radiale par rapport à un axe A-A' de la conduite, le terme « extérieur » s'entendant comme relativement plus éloigné radialement de l'axe A-A' et le terme « intérieur » s'entendant comme relativement plus proche radialement de l'axe A-A' de la conduite.

Par ailleurs, les termes « amont » et « aval » s'entendent généralement par rapport au sens normal de circulation d'un fluide pétrolier au sein de la conduite.

Dans le cas particulier d'une conduite d'injection de fluide, le fluide est injecté depuis la partie haute vers la partie basse de la conduite. Les termes « amont » et « aval » doivent par conséquent être interprétés à l'inverse d'une conduite normale de production.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

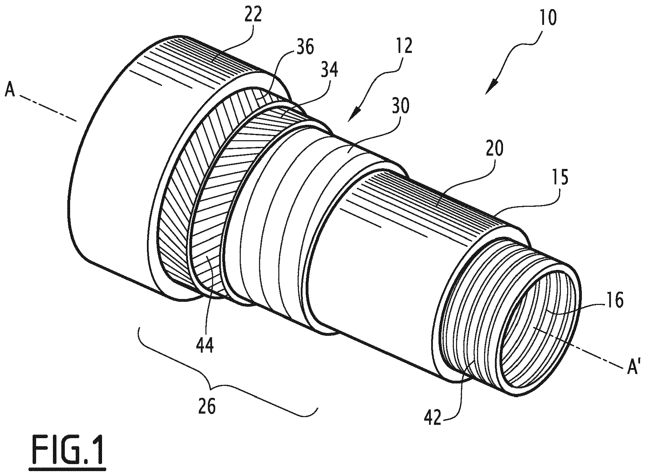

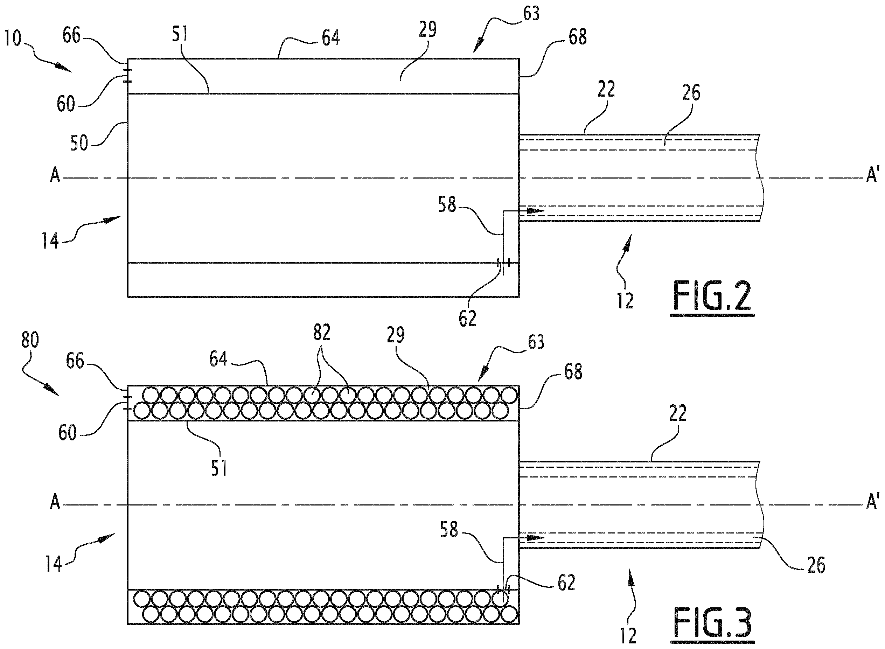

Une première ligne selon l'invention, formée par une conduite flexible 10, est illustrée partiellement par les figures 1 et 2.

La conduite flexible 10 comporte un tronçon central 12 illustré en partie sur la figure 1. Elle comporte, à chacune des extrémités axiales du tronçon central 12, un embout d'extrémité 14, visible partiellement sur la figure 2.

En référence à la figure 1, la conduite 10 délimite, dans son volume intérieur 15, un passage central 16 de circulation d'un fluide, avantageusement d'un fluide pétrolier. Le passage central 16 s'étend suivant un axe A-A', qu'il contient, entre l'extrémité amont et l'extrémité aval de la conduite 10. Il débouche à travers les embouts 14.

Le diamètre du passage central 16 est avantageusement compris entre 50 mm (2") et 500 mm (20").

Le fluide convoyé par la conduite est par exemple un gaz ou un liquide extrait du sous-sol marin.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 50 m et 4000 m.

L'installation d'exploitation de fluide comporte un ensemble de surface, généralement flottant, et un ensemble de fond (non représenté) qui sont généralement raccordés entre eux par la conduite flexible 10.

La conduite flexible 10 est dans cet exemple une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches adjacentes de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

La conduite 10 comporte ici au moins une première gaine 20 à base de matériau polymère constituant une gaine de pression. La conduite 10 comprend une deuxième gaine externe 22, destinée à la protection de la conduite 10.

La gaine externe 22 définit avec la gaine interne 20, un espace annulaire interne 26, qui, selon l'invention, est destiné à être inondé par de l'eau provenant de l'étendue d'eau.

Selon l'invention, en référence à la figure 2, la conduite 10 définit au moins un espace tampon 29 séparé de l'espace annulaire 26, destiné à limiter l'échange d'eau entre l'étendue d'eau et l'espace annulaire 26.

Dans cet exemple, dans l'espace annulaire 26, la conduite 10 comporte une voûte de pression 30, et optionnellement, une frette interne (non représentée) enroulée autour de la voûte de pression 30.

La conduite 10 comporte une pluralité de couches d'armures de traction 34, 36 internes disposées extérieurement autour de la voûte de pression 30 ou de la frette lorsqu'elle est présente.

Avantageusement, la conduite 10 comporte en outre une carcasse interne 42 disposée à l'intérieur de la gaine interne 20.

La carcasse 42, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

L'enroulement hélicoïdal du feuillard métallique profilé formant la carcasse 42 est à pas court, c'est-à-dire qu'il présente un angle d'hélice de valeur absolue proche de 90°, typiquement compris entre 75° et 90°.

Dans cet exemple, la carcasse 42 est disposée à l'intérieur de la gaine interne 20. La conduite est alors désignée par le terme anglais « rough bore » en raison de la géométrie de la carcasse 42.

En variante (non représentée), la conduite flexible 10 est dépourvue de carcasse interne 42, elle est alors désignée par le terme anglais « smooth bore ».

De manière connue, la gaine interne 20 est destinée à confiner de manière étanche le fluide transporté dans le passage 16. Elle est formée en matériau polymère, par exemple à base d'une polyoléfine telle que du polyéthylène, à base d'un polyamide tel que du PA11 ou du PA12, ou à base d'un polymère fluoré tel que du polyfluorure de vinylidène (PVDF).

L'épaisseur de la gaine interne 20 est par exemple comprise entre 5 mm et 20 mm.

Dans cet exemple, la voûte de pression 30 est destinée à reprendre les efforts liés à la pression régnant à l'intérieur de la gaine interne 20. Elle est par exemple formée d'un fil profilé métallique entouré en hélice autour de la gaine 20. Le fil profilé présente de préférence une géométrie, notamment en forme de Z. La géométrie en Z permet d'améliorer la résistance mécanique générale de la conduite 10 et permet aussi de réduire sa masse.

En variante, le fil profilé présente une géométrie en forme de T, de U, de K, de X ou de I.

La voûte de pression 30 est enroulée en hélice à pas court autour de la gaine interne 20, c'est-à-dire avec un angle d'hélice de valeur absolue proche de 90°, typiquement compris entre 75° et 90°.

La frette, lorsqu'elle est présente, est constituée par un enroulement en spirale d'au moins un fil avantageusement de section transversale rectangulaire autour de la voûte de pression 30.

La superposition de plusieurs fils enroulés autour de la voûte de pression 30 peut avantageusement remplacer une épaisseur totale de frette donnée. Ceci permet d'augmenter la résistance à l'éclatement de la conduite 10, mais également de diminuer le risque de fatigue par frottement. L'enroulement du au moins un fil est à pas court, c'est-à-dire avec un angle d'hélice de valeur absolue proche de 90°, typiquement compris entre 75° et 90°.

Dans une variante de réalisation de l'invention, la voûte de pression 30 et la frette sont remplacées par une voûte de pression d'épaisseur plus importante formée à partir d'un fil profilé en métal présentant une géométrie en forme de T, de U, de K, de X ou de I, et/ou à partir d'au moins une bande en aramide à résistance mécanique élevée (Technora® ou Kevlar®), et/ou à partir d'au moins une bande composite comprenant une matrice thermoplastique dans laquelle sont noyées des fibres de carbone ou des fibres de verre.

Dans l'exemple représenté sur la figure 1, la conduite flexible 10 comporte au moins une paire de couches d'armures 34, 36.

Chaque paire comporte une première couche d'armures externes 34 appliquée sur la voûte de pression 30 ou sur une gaine intermédiaire (non représentée) ou sur une autre paire de couches d'armures externes, et une deuxième couche d'armures externes 36, disposée autour de la première couche d'armures externes 34.

En variante, une deuxième paire de couche d'armures externes (non représentée) est appliquée par-dessus les couches d'armures externes 34, 36.

Chaque couche d'armures externes 34, 36 comporte au moins un élément d'armure 44 longitudinal enroulé à pas long autour de l'axe A-A' de la conduite 10.

Par « enroulé à pas long », on entend que la valeur absolue de l'angle d'hélice est inférieure à 60°, et est typiquement comprise entre 20° et 60°.

Dans l'exemple représenté sur la figure 1, la valeur absolue de l'angle d'hélice de chaque couche d'armures externes 34, 36 ,est inférieure à 45°, et est notamment comprise entre 20° et 30°, et est environ égale à 25°.

Les éléments d'armure 44 d'une première couche 34 sont enroulés généralement suivant un angle opposé par rapport aux éléments d'armure 44 d'une deuxième couche 36 Ainsi, si l'angle d'enroulement des éléments d'armure 44 de la première couche 34 est égal à + α, α étant compris entre 20° et 60°, l'angle d'enroulement des éléments d'armure 44 de la deuxième couche 36 disposée au contact de la première couche 34 est par exemple de - α, avec α compris entre 20° et 60°.

Les éléments d'armure 44 sont par exemple formés par des fils métalliques ou en matériau composite, ou par des rubans à résistance mécanique élevée.

Dans cet exemple, chaque couche d'armures 34, 36 repose sur au moins une bande anti-usure. La bande anti-usure est par exemple réalisée en plastique, notamment à base d'un polyamide ou d'un polyfluorure de vinylidène (PVDF). Elle présente une épaisseur inférieure à l'épaisseur de chaque gaine 20, 22, 24.

Avantageusement, un ruban de maintien tel qu'une bande en aramide à résistance mécanique élevée (Technora® ou Kevlar®) est enroulé autour de la deuxième couche d'armures externes 36 la plus à l'extérieur par rapport à l'axe A-A', pour assurer un maintien mécanique des couches d'armures externes 34, 36.

Dans cet exemple, la gaine externe 22 est destinée à protéger l'espace annulaire 26 en empêchant la pénétration non contrôlée de fluide depuis l'extérieur de la conduite flexible 10 vers l'intérieur. Elle est avantageusement réalisée en matériau polymère, notamment à base d'une polyoléfine, tel que du polyéthylène ou du polypropylène, à base d'un polyamide, tel que du PA11 ou du PA12, ou à base d'un polymère fluoré tel que du polyfluorure de vinylidène (PVDF).

L'épaisseur de la gaine externe 22 est par exemple comprise entre 5 mm et 15 mm.

La gaine externe 22 est étanche. Elle empêche la pénétration de liquide depuis l'extérieur de la conduite 10 vers le volume intérieur 15. Selon l'invention, elle est apte à confiner le liquide introduit dans l'espace annulaire 26 à travers l'espace tampon 29.

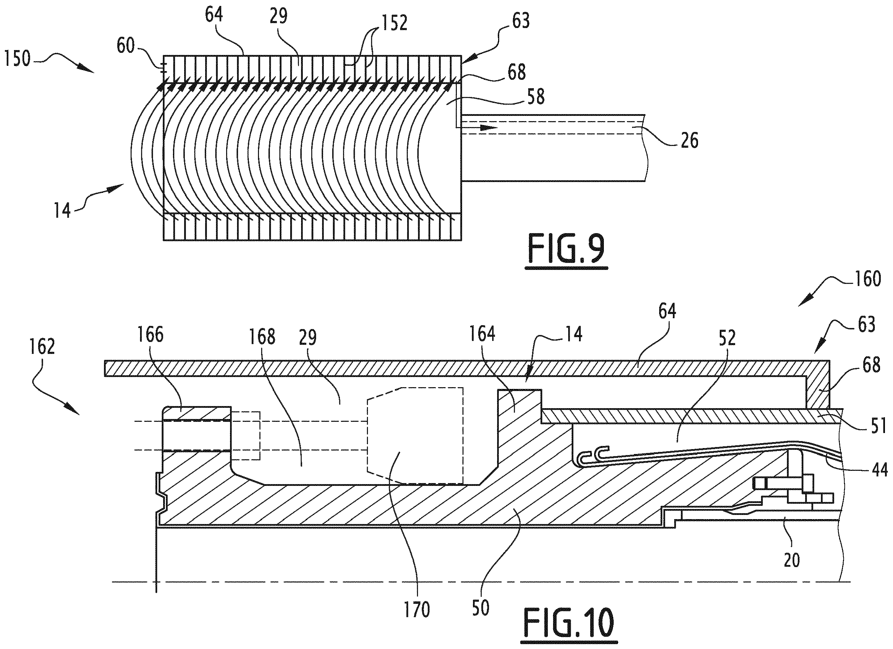

D'une manière connue, en référence à la figure 2, la conduite 10 est raccordée à l'ensemble de surface par l'embout 14. Chaque embout 14 comporte une voûte d'extrémité 50, et un capot 51 délimitant avec la voûte 50 une chambre 52 de réception (visible sur la figure 10) des extrémités des éléments d'armure 44 et des couches formant la conduite, en particulier les gaines 20, 22.

L'embout 14 comporte ainsi des éléments de sertissage (non représentés) de l'extrémité de chaque gaine 20, 22. Les éléments de sertissage sont destinés respectivement à assurer l'étanchéité entre l'extérieur de la conduite 10 et l'espace annulaire 26 autour de la gaine externe 22, et entre l'espace annulaire interne 26 et le passage central 16, autour de la gaine interne 20.

Dans cet exemple, la voûte d'extrémité 50 est destinée à raccorder la conduite 10 à un autre embout 14 ou à des équipements terminaux de fond et/ou de surface, avantageusement par l'intermédiaire d'une bride d'extrémité.

La voûte d'extrémité 50 présente un alésage central destiné à recevoir l'extrémité de la gaine de pression 20 et à permettre l'écoulement du fluide circulant à travers le passage central 16 vers l'extérieur de la conduite 10.

Selon l'invention, l'embout 14 délimite au moins un passage 58 de communication fluidique entre l'espace tampon 29 et l'espace annulaire 26, pour permettre l'inondation initiale de l'espace annulaire 26 par un liquide, notamment par de l'eau présente dans l'étendue d'eau, ce liquide étant amené à travers l'espace tampon 29.

Le passage de communication 58 est dégagé en permanence. Aucune valve ou système d'obturation n'est placé dans le passage de communication 58.

L'espace tampon 29 présente un volume propre à absorber les variations de volume de l'espace annulaire 26, par exemple lors de variations de pressions du fluide circulant dans le passage de circulation 16, ou lors des excursions en hauteur de l'embout 14.

Le volume de l'espace tampon 29 est supérieur à 1% du volume de l'espace annulaire 26 et est avantageusement compris entre 30 % et 50% du volume de l'espace annulaire 26. Le volume de l'espace tampon 29 est supérieur à 10 litres et compris généralement entre 50 litres et 600 litres.

Dans cet exemple, le volume de l'espace tampon 29 est constant lors de son utilisation.

L'espace tampon 29 comporte au moins une entrée 60 de communication avec l'étendue d'eau, destinée à déboucher dans l'étendue d'eau et au moins une sortie 62 de communication avec l'espace annulaire 26, raccordée à l'espace annulaire 26, par l'intermédiaire du passage de communication 58.

Dans la première conduite flexible 10 selon l'invention, représentée sur la figure 2, l'espace tampon 29 est un volume annulaire situé à l'extérieur de l'embout 14. Il est délimité par un compartiment annulaire 63 comportant une paroi extérieure 64 de révolution, rapportée autour du capot 51 de l'embout 14.

Le compartiment 63 est fermé transversalement à ses extrémités par des parois transversales 66, 68 raccordées au capot 51 de l'embout 14.

L'entrée 60 est ici ménagée axialement dans la paroi transversale avant 66. L'entrée 60 est généralement ouverte en permanence. Aucune valve ou système d'obturation n'est placée dans l'entrée 60, qui reste dégagée.

Cependant, dans une variante de réalisation (non représentée et non revendiquée) de la première conduite, l'entrée 60 est obturée par un clapet, une soupape ou encore une membrane pour gérer le flux d'eau de mer entrant et sortant de l'espace tampon 29.

La sortie 62 est ici ménagée radialement à travers le capot 51 de l'embout 14. La sortie 62 est ouverte en permanence. Aucune valve ou système d'obturation n'est placée dans la sortie 62, qui reste dégagée en permanence.

Dans cet exemple, l'espace tampon 29 s'étend avantageusement sur toute la longueur de l'embout 14, prise le long de l'axe A-A'. Cette longueur est par exemple supérieure à 50 cm, est par exemple comprise entre 80 cm et 1,50 m.

L'épaisseur radiale de l'espace tampon 29 est supérieure à 10 cm, et est par exemple comprise entre 15 cm et 30 cm.

L'espace tampon 29 est ici vide. Il est propre à être rempli totalement par du liquide ou par du gaz.

Le fonctionnement de la première conduite flexible 10 selon l'invention va maintenant être décrit.

Initialement, la conduite flexible 10 est fabriquée en maintenant l'espace annulaire 26 et l'espace tampon 29 remplis de gaz. L'espace annulaire 26 et l'espace tampon 29 sont raccordés entre eux par le passage de communication 58.

La conduite flexible 10 est ensuite immergée dans l'étendue d'eau. Lors de cette immersion, de l'eau provenant de l'étendue d'eau pénètre initialement dans l'espace tampon 29 à travers l'entrée 60. L'eau remplit l'espace tampon 29, et atteint l'espace annulaire 26 en passant exclusivement à travers le passage de communication 58. Elle remplit alors l'espace annulaire 26.

Les éléments d'armure 44 présents dans l'espace annulaire 26 subissent alors un phénomène de corrosion partielle qui consomme l'oxygène présent dans l'espace annulaire 26.

De plus, l'eau reçue dans l'espace annulaire 26 est saturée en ions Fe²⁺, propres à consommer le sulfure d'hydrogène provenant du passage de circulation 16.

Le phénomène de corrosion des éléments d'armure 44 est donc très limité, du fait du manque d'oxygène dans l'eau inondant l'espace annulaire 26, et de la consommation du sulfure d'hydrogène par les ions Fe²⁺ dissous dans cette eau.

Lorsque le volume de l'espace annulaire 26 varie sous l'effet des variations de la pression du fluide dans le passage 16, ou sous l'effet des excursions en hauteur de l'embout 14, un renouvellement d'eau se produit au niveau de l'espace tampon 29, à travers l'entrée 60.

Toutefois, le volume de l'espace tampon 29 étant suffisamment important, l'eau présente dans l'espace annulaire 26 ne se renouvelle peu ou pas et reste confinée dans l'espace annulaire 26. La teneur en oxygène de cette eau varie donc peu ou pas, empêchant la corrosion des éléments d'armure 44.

L'eau qui entre et qui sort de l'espace annulaire 26 à travers le passage de communication 58 et la sortie 62 de l'espace tampon 29 est quasiment toujours la même, ce qui signifie que l'oxygène qu'elle contient n'est pas renouvelé ou l'est de manière très limitée. Cet oxygène étant consommé, la vitesse de corrosion des éléments d'armure 44 n'augmente pas.

L'embout 14 d'une deuxième conduite flexible 80 selon l'invention est illustré par la figure 3.

Cet embout 14 diffère de celui de la première conduite flexible 10 en ce que l'espace tampon 29 contient un enroulement tubulaire 82 formé d'un conduit s'étendant autour de l'axe A-A' entre le capot 51 et la paroi extérieure 64.

L'enroulement tubulaire 82 est réalisé à base d'un métal propre à se corroder, tel qu'un acier au carbone. L'épaisseur du tube dans l'enroulement 82 est calculée pour accommoder la corrosion provoquée par l'eau présente dans l'espace tampon 29.

Dans cet exemple, l'enroulement tubulaire 82 définit une lumière hélicoïdale raccordée à l'entrée 60 pour recevoir de l'eau de l'étendue d'eau 12. La lumière débouche dans la sortie 62 pour être raccordée à l'espace annulaire 26 par l'intermédiaire du passage de communication 58.

L'eau provenant de l'étendue d'eau est ainsi propre à circuler à l'intérieur de l'enroulement tubulaire 82 depuis l'entrée 60 jusqu'à la sortie 62. De préférence, l'eau de l'étendue d'eau circule aussi dans l'espace tampon 29 à l'extérieur de l'enroulement tubulaire 82 pour augmenter la surface disponible pour la corrosion, et donc la consommation d'oxygène.

Dans ce mode de réalisation, l'espace tampon 29 contient donc des moyens actifs participant à la consommation d'oxygène. Ces moyens actifs sont formés par l'enroulement tubulaire 82 qui se corrode progressivement.

Le fonctionnement de la deuxième conduite flexible 80 selon l'invention diffère de celui de la première conduite flexible 10 en ce que la corrosion de l'enroulement tubulaire 82 dans l'espace tampon 29, lors de chaque renouvellement d'eau dans l'espace tampon 29 contribue à diminuer encore l'oxygène introduit dans l'espace annulaire 26 lors du renouvellement.

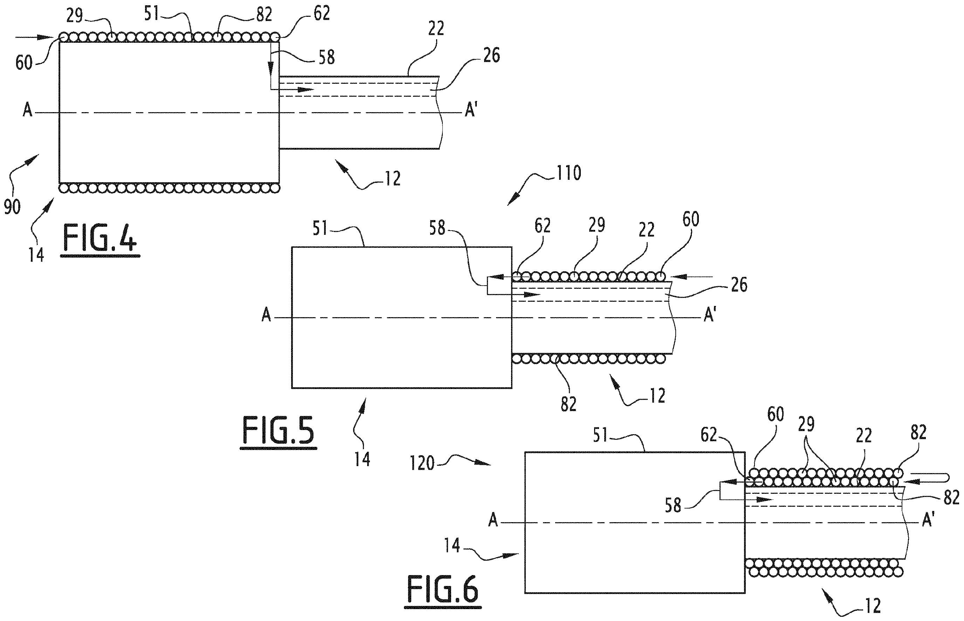

Une troisième conduite flexible 90 selon l'invention est illustrée par la figure 4. À la différence de la deuxième conduite flexible 80, l'espace tampon 29 est délimité exclusivement dans la lumière interne de l'enroulement tubulaire 82. La conduite 90 est ainsi dépourvue de compartiment 63 ayant une paroi extérieure 64 et des parois transversales 66, 68. L'enroulement tubulaire 82 est disposé directement autour du capot 51, en contact avec l'étendue d'eau.

L'enroulement tubulaire 82 présente avantageusement un diamètre intérieur compris entre 15 mm et 25 mm et un diamètre extérieur compris entre 20 mm et 30 mm. La longueur déroulée de l'enroulement tubulaire 82 est par exemple supérieure à 50 m, notamment supérieure à 100 m. Le volume de l'espace tampon 29 est ainsi supérieur à 30 l, est par exemple compris entre 35 l et 60 l.

Comme précédemment, l'enroulement tubulaire 82 est de préférence formé d'un matériau propre à subir une corrosion, tel qu'un acier au carbone. Le confinement interne, défini comme le rapport du volume sur la section du tube est avantageusement inférieur à 0,6 ml/cm², et est par exemple compris entre 0,1 ml/cm² et 0,4 ml/cm². Un tel confinement permet généralement une consommation rapide d'oxygène, et une supersaturation en fer dans un délai inférieur à quelques jours, notamment inférieur à un jour.

Une quatrième conduite flexible 110 selon l'invention est illustrée par la figure 5. A la différence de la troisième conduite flexible 90, l'enroulement tubulaire 82 est situé à l'extérieur de la gaine externe 22, sur le tronçon central 12 de la conduite flexible 110. L'entrée 60 est située également en regard du tronçon central 12. La sortie 62 débouche dans le passage de communication 58 ménagé à travers l'embout 14.

Le fonctionnement de la quatrième conduite flexible 110 selon l'invention est analogue à celui de la troisième conduite flexible 90.

Une cinquième conduite flexible 120 selon l'invention est illustrée par la figure 6. À la différence de la quatrième conduite flexible 110, la cinquième conduite flexible 120 comporte plusieurs couches d'enroulements tubulaires 82 successifs, disposées les uns autour des autres. Les enroulements 82 sont raccordés entre eux pour augmenter le volume de l'espace tampon 29.

L'entrée 60 est avantageusement située sur l'enroulement tubulaire 82 localisé le plus à l'extérieur par rapport à l'axe A-A' de la conduite 120.

Le fonctionnement de la cinquième conduite flexible 120 selon l'invention est par ailleurs analogue à celui de la troisième conduite flexible selon l'invention 90.

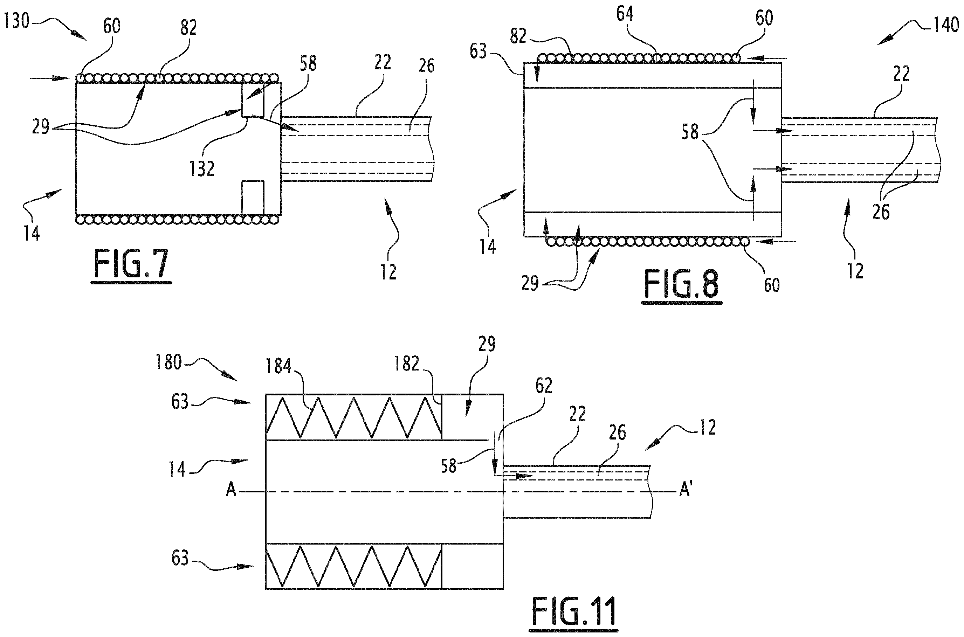

Une sixième conduite flexible selon l'invention 130 est illustrée par la figure 7. La sixième conduite 130 diffère de la troisième conduite 90 en ce que l'espace tampon 29 comporte en outre un compartiment interne 132 délimité dans l'embout 14. Le compartiment interne 132 est interposé entre l'enroulement tubulaire 82 et le passage de communication 58. Le volume du compartiment interne 132 est par exemple compris entre 10 % et 25 % du volume de l'enroulement 82.

Le compartiment interne 132 permet encore un peu plus le confinement de l'eau en présence et donc d'appauvrir sa teneur en oxygène.

Le fonctionnement de la sixième conduite flexible 130 est par ailleurs analogue à celui de la troisième conduite flexible 90.

Une septième conduite flexible selon l'invention 140 est illustrée par la figure 8. La septième conduite flexible 140 diffère de la deuxième conduite flexible 80 en ce que l'enroulement tubulaire 82 est disposé hors du compartiment 63, à l'extérieur de la paroi extérieure 64.

L'espace tampon 29 comporte donc un premier volume extérieur, délimité par l'enroulement tubulaire 82, et un deuxième volume intérieur, délimité par le compartiment 63. Le premier volume intérieur est raccordé au deuxième volume intérieur à travers la paroi extérieure 64.

Le fonctionnement de la septième conduite flexible 140 est par ailleurs analogue à celui de la deuxième conduite flexible 80.

Une huitième conduite flexible selon l'invention 150 est illustrée par la figure 9. La huitième conduite flexible 150 diffère de la première conduite flexible 10 en ce que des cloisons transversales 152 sont disposées dans le compartiment 63 pour former un parcours de circulation de l'eau de mer sous la forme d'une succession de chicanes ou d'un parcours sous la forme d'une hélice dans l'espace tampon 29.

Les cloisons transversales 152 limitent le mélange d'eau dans l'espace tampon 29, et sa communication vers l'espace annulaire 26.

Le fonctionnement de la huitième conduite flexible selon l'invention 150 est analogue à celui de la première conduite flexible 10.

Une neuvième conduite flexible selon l'invention 160 est illustrée par la figure 10. Cette conduite flexible 160 comporte un premier embout 14 disposé à une extrémité d'un premier tronçon central 12 (non visible sur la figure 10) et un deuxième embout 162, raccordé au premier embout 14 et disposé à une extrémité d'un deuxième tronçon central 12 (non visible sur la figure 10).

Chaque embout 14, 162 comporte une voûte 50 munie d'une collerette 164 intermédiaire de montage et d'appui du capot 51, et d'une bride d'extrémité 166 destinée au montage sur un autre embout 162, 14.

La voûte 50 définit, entre la bride 166 et la collerette 164, un volume annulaire 168 s'ouvrant vers l'extérieur, pour recevoir des organes de fixation 170 des embouts 14, 162 entre eux.

Dans la neuvième conduite flexible 160, le compartiment 63 s'étend partiellement autour de l'embout 14, et partiellement autour de l'embout 162 en regard. Il est délimité par une paroi extérieure 64 couvrant partiellement les deux embouts 14, 162, au-dessus du capot 51, de la collerette 164 et de la bride 166.

La paroi transversale arrière 68 est montée sur le capot 51 de l'embout 14 et la paroi transversale avant 66 (non visible sur la figure 10) est montée sur le capot 51 de l'embout 162.

L'espace tampon 29 est ainsi défini à l'extérieur de la voûte d'extrémité 50 et du capot 51, autour de chaque collerette intermédiaire 164, de chaque volume annulaire 168 et de chaque bride 166.

L'espace tampon 29 est raccordé à l'espace annulaire 26 de chaque tronçon central 12 à travers une sortie 62 distincte.

La neuvième conduite flexible 160 fonctionne par ailleurs de manière analogue à la première conduite flexible 10.

Une dixième conduite flexible 180 selon l'invention est illustrée par la figure 11. À la différence de la première conduite flexible 10 illustrée sur la figure 2, le volume de l'espace tampon 29 est variable.

À cet effet, dans l'exemple représente sur la figure 11, l'espace tampon 29 est délimité dans le compartiment 63 par une cloison transversale 182 mobile entre une première position, dans laquelle le volume de l'espace tampon est maximal, et une deuxième position, dans laquelle le volume de l'espace tampon 29 est minimal.

Dans cet exemple, la cloison 182 s'étend transversalement par rapport à l'axe longitudinal A-A' de la conduite. Elle est mobile longitudinalement suivant l'axe A-A'. Elle obture l'espace tampon 29 transversalement à l'avant.

Avantageusement, le compartiment 63 contient un moyen 184 de rappel élastique de la cloison 182 vers la première position.

Dans l'exemple représenté sur la figure 11, le moyen de rappel élastique 184 est un ressort élastique ou métallique en acier inoxydable. En variante, le moyen de rappel élastique 184 est un volume de gaz confiné de manière étanche à l'avant de la cloison 182.

Dans une variante non revendiquée, une fois l'espace tampon 29 et l'espace annulaire 26 remplis, l'espace tampon 29 est refermé, par exemple en obturant l'entrée 60, lorsqu'elle existe dans une telle variante. Dans une telle variante non revendiquée, le volume délimité par l'espace tampon 29, le passage de communication 58 et l'espace annulaire 26 est donc obturé de manière étanche.

La variation de volume de l'espace annulaire 26 est compensée en fonctionnement par une variation correspondante de volume de l'espace tampon 29, sous l'effet du déplacement de la cloison mobile 182.

En particulier, lorsque le volume de l'espace annulaire 26 diminue, de l'eau présente dans l'espace annulaire 26 est évacuée vers l'espace tampon 29 à travers le passage de communication 58. Ceci provoque le déplacement de la cloison mobile 182 vers la première position, à l'encontre du moyen de rappel élastique 184.

Au contraire, lorsque le volume de l'espace annulaire 26 augmente, de l'eau présente dans l'espace tampon 29 se déplace à travers le passage de communication 58 vers l'espace annulaire 26. La cloison 182 se déplace vers la deuxième position, sous l'effet du moyen de rappel élastique 184.

Les matériaux délimitant le compartiment 63 sont choisis pour éviter la diffusion d'oxygène provenant de l'étendue d'eau vers l'espace tampon 29.

En variante, le compartiment 63 n'est pas monté autour de l'embout, mais est monté autour du tronçon central 12.

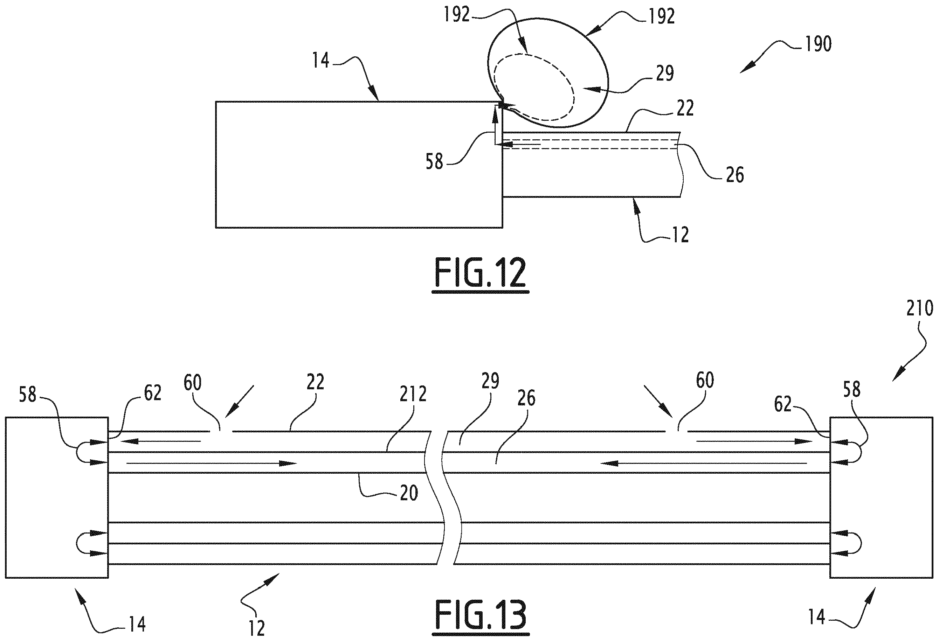

Une onzième conduite flexible 190 non revendiquée est illustrée par la figure 12. Comme pour la dixième conduite flexible 180, le volume de l'espace tampon 29 est variable.

Dans cet exemple, l'espace tampon 29 est délimité par une paroi 192 déformable élastiquement formant une poche. La paroi 192 est par exemple réalisée à l'aide d'un matériau élastomère.

Dans cet exemple, la paroi 192 est montée sur l'embout 14. Elle débouche exclusivement dans le passage de communication 58.

La paroi 192 est déformable de manière réversible entre une première configuration de volume minimal, représentée en pointillés sur la figure 12 et une deuxième configuration de volume maximal, représentée en trait plein sur la figure 12.

Comme précédemment dans une variante non revendiquée, le volume total délimité par l'espace tampon 29, le passage de communication 58, et l'espace annulaire 26 est obturé de manière étanche.

La variation de volume de l'espace annulaire 26 est compensée en fonctionnement par une variation correspondante de volume de l'espace tampon 29, sous l'effet de la déformation de la paroi 192.

En particulier, lorsque le volume de l'espace annulaire 26 diminue, de l'eau présente dans l'espace annulaire 26 est évacuée vers l'espace tampon 29 à travers le passage de communication 58. Ceci provoque la déformation de la paroi 192 vers la deuxième configuration.

Au contraire, lorsque le volume de l'espace annulaire 26 augmente, de l'eau présente dans l'espace tampon 29 se déplace à travers le passage de communication 58 vers l'espace annulaire 26. La paroi 192 se déforme vers la première configuration.

Le matériau formant la paroi 192 est choisi pour éviter la diffusion d'oxygène provenant de l'eau de l'étendue d'eau vers l'espace tampon 29.

Une douzième conduite flexible 210 selon l'invention est illustrée par la figure 13. La douzième conduite flexible 210 diffère de la première conduite flexible 10 en ce qu'elle comporte une gaine intermédiaire 212 disposée entre la gaine externe 22 et la gaine de pression 20.

L'espace annulaire 26 contenant les éléments d'armure 44 est délimité radialement par rapport à l'axe A-A' vers l'intérieur par la gaine de pression 20 et vers l'extérieur par la gaine intermédiaire 212.

L'espace tampon 29 est délimité radialement par rapport à l'axe A-A' vers l'intérieur par la gaine intermédiaire 212 et vers l'extérieur par la gaine intermédiaire 212.

Dans cet exemple, la gaine intermédiaire 212 est totalement étanche sur toute la longueur du tronçon central 12. La communication entre l'espace annulaire 26 et l'espace tampon 29 s'effectue exclusivement à travers des passages de communication 58 ménagés dans les embouts 14 de la conduite 210.

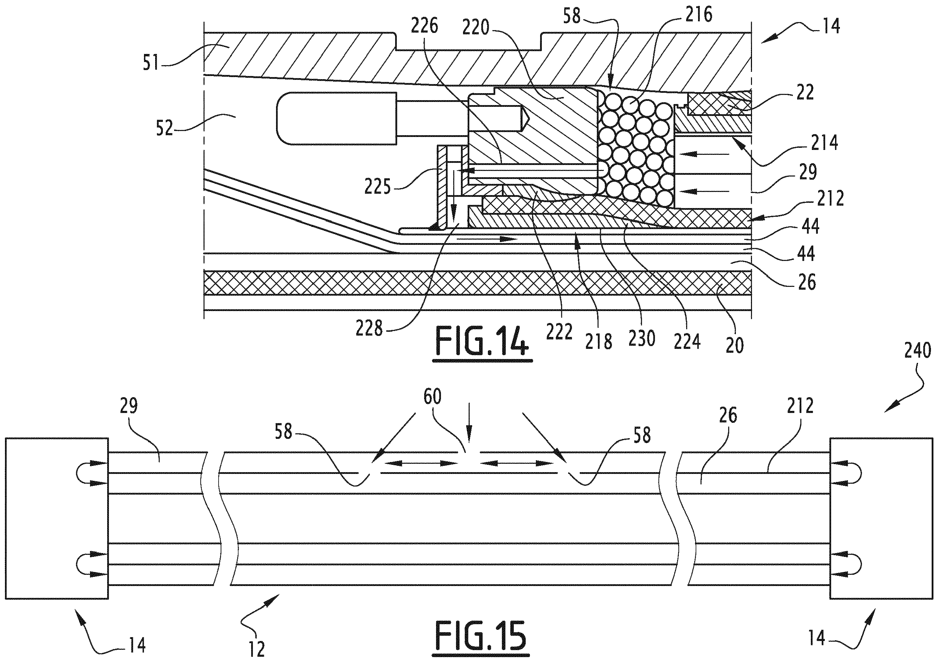

Dans l'exemple représenté sur la figure 14, l'embout 14 comporte un premier ensemble 214 de sertissage de la gaine externe 22, un volume intermédiaire incompressible 216 et un deuxième ensemble 218 de sertissage de la gaine intermédiaire 212.

L'ensemble de sertissage 218 comporte une bague d'arrêt 220, une bague de sertissage 222 montée à l'avant de la bague d'arrêt 220 et venant en prise avec l'extrémité de la gaine intermédiaire 212, et avantageusement, une canule d'appui 224 reposant sur les éléments d'armure 44 disposés dans l'espace annulaire 26.

L'ensemble de sertissage 218 comporte en outre une pièce de poussée 225, propre à assurer la pénétration radiale de la bague de sertissage 222 dans la gaine intermédiaire 212 par appui sur la bague d'arrêt 220.

Le passage de communication 80 comporte le volume 216, un canal 226 axial ménagé à travers la bague d'arrêt 220 et un canal radial 228 ménagé radialement à travers la pièce de poussée 225. Le passage de communication 80 comporte avantageusement un canal inférieur 230 ménagé sous la canule 224.

Dans cet exemple, l'espace tampon 29 contient avantageusement des matériaux de support, tel qu'une bande d'isolation disposée entre la gaine externe 22 et la gaine intermédiaire 212.

L'espace tampon 29 comporte au moins une entrée 60 formée par un trou prévu dans la gaine externe 22. Avantageusement, la gaine externe 22 délimite une pluralité d'entrées 60, situées de part et d'autre du tronçon central 12, au voisinage de chaque embout 14.

De préférence, la distance minimale séparant chaque entrée 60 d'un passage de communication 58, prise le long de l'axe A-A' est supérieure au rapport R de la variation maximale de volume de l'espace annulaire 26 en opération, sur le volume par unité de longueur de l'espace tampon 29.

En fonctionnement, l'eau de l'étendue d'eau pénètre dans l'espace tampon 29 à travers chaque entrée 60 ménagée dans la gaine externe 22. L'eau inonde l'espace tampon 29, et passe dans chaque passage de communication 58.

Dans l'exemple représenté sur la figure 14, l'eau circule à travers le volume 216, le canal axial 226, puis le canal radial 228 jusqu'à l'espace annulaire 26 entre la gaine intermédiaire 212 et la gaine de pression 20. L'eau inonde ainsi l'espace annulaire 26.

Lors des variations de volume de l'espace annulaire 26, l'espace annulaire 26 reçoit uniquement de l'eau ayant circulé à travers l'espace tampon 29.

Le volume de l'espace tampon 29 étant significatif, et la distance minimale séparant chaque entrée 60 du passage de communication 58 étant supérieure au rapport R précité, le renouvellement d'eau dans l'espace annulaire 26 est limité, voire supprimé, ce qui limite la corrosion des éléments d'armure 44.

Une treizième conduite flexible 240 selon l'invention est illustrée par la figure 15. À la différence de la douzième conduite flexible 210, la gaine intermédiaire 212 est percée pour délimiter des passages 58 de communication entre l'espace tampon 29 et l'espace annulaire 26.

Comme précédemment, la distance minimale, prise le long de l'axe A-A', séparant chaque entrée 60 d'un passage de communication 58 est supérieure au rapport R précité.

Le fonctionnement de la treizième conduite flexible 240 est par ailleurs analogue à celui de la douzième conduite flexible 210.

En variante, l'espace tampon 29 contient un moyen actif participant à la consommation d'oxygène tel qu'un élément métallique, une protection cathodique, ou un agent d'élimination de l'oxygène tel que des sulfites ou bisulfites par exemple.

Dans une autre variante, on insère un tronçon intermédiaire de conduite rigide métallique ou « riser » entre deux tronçons de conduites flexibles, un tronçon supérieur et un tronçon inférieur. Le tronçon intermédiaire rigide possède une géométrie lui permettant d'accueillir un espace tampon. L'espace tampon comporte une entrée en contact avec l'étendue d'eau et un passage de communication le reliant, via l'embout d'extrémité, à l'annulaire du tronçon inférieur de la conduite flexible inférieure.

En variante encore la ligne est une ligne de production multifonctions de type « integrated production bundle », comprenant au moins un tube de transport de fluide et un ensemble de câbles électriques ou optiques propres à transporter une puissance électrique ou hydraulique ou une information entre le fond et la surface de l'étendue d'eau.

En variante, la ligne est un ombilical.

## Revendications

1. Ligne destinée à être immergée dans une étendue d'eau, comprenant :
- une gaine externe (22) définissant un volume intérieur (15) ;
- au moins une couche d'armures de traction (34, 36) disposée dans un espace annulaire (26) défini dans le volume intérieur (15), l'espace annulaire (26) étant propre à être inondé par un liquide, notamment par de l'eau provenant de l'étendue d'eau ;
la ligne définit un espace tampon (29) présentant au moins une sortie (62) raccordée à l'espace annulaire (26), pour recevoir du liquide provenant de l'espace annulaire (26) ou distribuer du liquide vers l'espace annulaire (26) lors de variations de volume de l'espace annulaire (26), dans laquelle l'espace tampon (29) est séparé de l'espace annulaire (26), le volume de l'espace tampon (29) étant supérieur à 1 % du volume de l'espace annulaire (26) et étant avantageusement compris entre 30 % et 50 % du volume de l'espace annulaire (26), le volume de l'espace tampon (29) étant supérieur à 10 litres, et dans laquelle l'espace tampon (29) comporte au moins une entrée (60) destinée à déboucher dans l'étendue d'eau, l'entrée (60) étant ouverte en permanence, aucune valve ou système d'obturation n'étant placée dans l'entrée (60), qui reste dégagée.

2. Ligne selon la revendication 1, dans laquelle l'espace tampon (29) présente un volume constant.

3. Ligne selon la revendication 1, dans laquelle l'espace tampon (29) présente un volume variable.

4. Ligne selon la revendication 3, dans laquelle l'espace tampon (29) est délimité par une paroi flexible (192) déformable par le liquide présent dans l'espace tampon (29) ou dans laquelle l'espace tampon (29) est délimité par une cloison mobile (182) sous l'effet du liquide présent dans l'espace tampon (29).

5. Ligne selon l'une quelconque des revendications précédentes, dans laquelle l'espace tampon (29) est délimité par au moins un élément métallique propre à s'oxyder en présence d'eau ou dans laquelle l'espace tampon (29) contient un élément métallique propre à s'oxyder en présence d'eau.

6. Ligne selon l'une quelconque des revendications précédentes, comprenant une partie centrale (12) et des embouts d'extrémité (14) situés de part et d'autre de la partie centrale (12).

7. Ligne selon la revendication 6, dans laquelle l'espace tampon (29) est délimité dans au moins un des embouts (14) ou/et autour d'au moins un des embouts (14).

8. Ligne selon l'une des revendications 6 ou 7, dans laquelle l'espace tampon (29) est disposé autour de la partie centrale (12), à l'extérieur de la gaine externe (22).

9. Ligne selon l'une quelconque des revendications précédentes, dans laquelle l'espace tampon (29) comporte au moins un conduit formant au moins un enroulement disposé autour de l'embout (14), dans l'embout (14), ou/et autour de la partie centrale (12).

10. Ligne selon l'une quelconque des revendications précédentes, comprenant au moins une gaine intermédiaire (212) disposée à l'intérieur de la gaine externe (22), l'espace annulaire (26) étant délimité extérieurement par la gaine intermédiaire (212), l'espace tampon (29) étant délimité entre la gaine intermédiaire (212) et la gaine externe (22), l'espace tampon (29) comportant au moins une entrée (60) destinée à déboucher dans l'étendue d'eau, l'entrée (60) étant ménagée à travers la gaine externe (22), la ligne comprenant avantageusement au moins un embout (14), l'espace annulaire (26) étant raccordé à l'espace tampon (29) à travers l'embout (14).

11. Ligne selon la revendication 10, dans laquelle l'espace annulaire (26) est raccordé à l'espace tampon (29) à travers la gaine intermédiaire (212).

12. Ligne selon l'une quelconque des revendications 10 à 11, dans laquelle la longueur minimale séparant l'entrée (60) de la sortie est supérieure au rapport de la variation de volume de liquide dans l'espace annulaire (26) en fonctionnement dans l'étendue d'eau sur le volume par unité de longueur de l'espace tampon (29), pris le long de la ligne.

13. Procédé de mise en place d'une ligne dans une étendue d'eau, comprenant les étapes suivantes :
- fourniture d'une ligne selon l'une quelconque des revendications précédentes ;
- immersion de la ligne dans une étendue d'eau ;
- inondation de l'espace annulaire (26) par un liquide, notamment par de l'eau provenant de l'étendue d'eau à travers l'espace tampon (29) ;
- variation du volume de l'espace annulaire (26) par circulation d'eau entre l'espace annulaire (26) et l'espace tampon (29).

## Patentansprüche

1. Leitung, die dazu bestimmt ist, in einer Wasserfläche versenkt zu werden, aufweisend:
- eine äußere Hülle (22), die ein inneres Volumen (15) definiert,
- wenigstens eine Schicht Zugverstärkungen (34, 36), die in einem Ringraum (26) angeordnet ist, der in dem inneren Volumen (15) definiert ist, wobei der Ringraum (26) imstande ist, von einer Flüssigkeit geflutet zu werden, insbesondere von Wasser, das von der Wasserfläche stammt,
wobei die Leitung einen Stopfenraum (29) definiert, der wenigstens einen Ausgang (62) hat, der mit dem Ringraum (26) verbunden ist, zum Empfangen der Flüssigkeit, die von dem Ringraum (26) stammt, oder Ausgeben der Flüssigkeit zu dem Ringraum (26) in Folge von Volumenvariationen des Ringraums (26),
wobei der Stopfenraum (29) von dem Ringraum (26) separiert ist, wobei das Volumen des Stopfenraums (28) größer als 1% des Volumens des Ringraums (26) ist und vorteilhafterweise zwischen 30% und 50% des Volumens des Ringraums (26) ist, wobei das Volumen des Stopfenraums (29) größer als 10 Liter ist, und wobei der Stopfenraum (29) wenigstens einen Eingang (60) aufweist, der dazu bestimmt ist, in der Wasserfläche auszumünden, wobei der Eingang (60) permanent offen ist, wobei kein Ventil oder Verschlusssystem in dem Eingang (60) platziert ist, der freiliegend bleibt.

2. Leitung gemäß Anspruch 1, wobei der Stopfenraum (29) ein konstantes Volumen hat.

3. Leitung gemäß Anspruch 1, wobei der Stopfenraum (29) ein variables Volumen hat.

4. Leitung gemäß Anspruch 3, wobei der Stopfenraum (29) begrenzt ist von einer flexiblen Wand (192), die von der Flüssigkeit verformbar ist, die in dem Stopfenraum (29) vorliegt, oder wobei der Stopfenraum (29) begrenzt ist von einer von der Wirkung der in dem Stopfenraum (29) vorhandenen Flüssigkeit bewegbaren Trennwand (182) begrenzt ist.

5. Leitung gemäß irgendeinem der vorhergehenden Ansprüche, wobei der Stopfenraum (29) begrenzt ist durch mindestens ein metallisches Element, das imstande ist, in Anwesenheit von Wasser zu oxidieren, oder wobei der Stopfenraum (29) ein metallisches Element enthält, das imstande ist, in Anwesenheit von Wasser zu oxidieren.

6. Leitung gemäß irgendeinem der vorhergehenden Ansprüche, aufweisend einen zentralen Abschnitt (12) und Endstücke (14), die beidseitig des zentralen Abschnitts (12) angeordnet sind.

7. Leitung gemäß Anspruch 6, wobei der Stopfenraum (29) begrenzt ist in wenigstens einem der Endstücke (14) und/oder um wenigstens eines der Endstücke (14).

8. Leitung gemäß einem der Ansprüche 6 oder 7, wobei der Stopfenraum (29) um den zentralen Abschnitt (12) herum außerhalb der äußeren Hülle (2) angeordnet ist.

9. Leitung gemäß irgendeinem der vorhergehenden Ansprüche, wobei der Stopfenraum (29) wenigstens eine Leitung aufweist, die wenigstens eine Wicklung bildet, die angeordnet ist um das Endstück (14) herum, in dem Endstück (14) oder/und um den zentralen Abschnitt (12) herum.

10. Leitung gemäß irgendeinem der vorhergehenden Ansprüche, aufweisend wenigstens eine Zwischenhülle (212), die im Inneren der äußeren Hülle (22) angeordnet ist, wobei der Ringraum (26) außen begrenzt ist durch die Zwischenhülle (212), wobei der Stopfenraum (29) begrenzt ist zwischen der Zwischenhülle (212) und der äußeren Hülle (22), wobei der Stopfenraum (29) aufweist wenigstens einen Eingang (60), der dazu bestimmt ist, in der Wasserfläche auszumünden, wobei der Eingang (60) quer durch die äußere Hülle (22) verläuft, wobei die Leitung vorteilhafterweise wenigstens ein Endstück (14) aufweist, wobei der Ringraum (26) quer durch das Endstück (14) mit dem Stopfenraum (29) verbunden ist.

11. Leitung gemäß Anspruch 10, wobei der Ringraum (26) quer durch die Zwischenhülle (212) mit dem Stopfenraum (29) verbunden ist.

12. Leitung gemäß irgendeinem der Ansprüche 10 bis 11, wobei die minimale Länge, die den Eingang (60) von dem Ausgang trennt, größer ist als das Verhältnis der Variation des Flüssigkeitsvolumens in dem Ringraum (26) im Betrieb in der Wassererstreckung zu dem Volumen pro Längeneinheit des Stopfenraums (29) entlang der Leitung.

13. Verfahren zum Verlegen einer Leitung in einer Wasserfläche, aufweisend die folgenden Schritte:
- Bereitstellen einer Leitung gemäß irgendeinem der vorhergehenden Ansprüche,
- Versenken der Leitung in einer Wasserfläche,
- Fluten des Ringraums (26) durch eine Flüssigkeit, insbesondere durch das Wasser, das von der Wasserfläche stammt, quer durch den Stopfenraum (29),
- Varriieren des Volumens des Ringraums (26) durch Strömen-Lassen von Wasser zwischen dem Ringraum (26) und dem Stopfenraum (29).

## Claims

1. A line intended to be submerged in a body of water, comprising:
- an outer sleeve (22) defining an inner space (15);
- at least one tensile armor layer (34, 36) arranged in an annular space (26) defined within the inner space (15), the annular space (26) being able to be flooded with a liquid, in particular water from the body of water;
the line defines a buffer space (29) having at least one outlet (62) connected to the annular space (26), to receive liquid from the annular space (26) or to dispense liquid to the annular space (26) during variations in the volume of the annular space (26),
in which the buffer space (29) is separated from the annular space (26), the volume of the buffer space (29) being greater than 1% of the volume of the annular space (26) and being advantageously between 30% and 50% of the volume of the annular space (26), the volume of the buffer space (29) being greater than 10 liters, and
in which the buffer space (29) comprises at least one inlet (60) intended to emerge in the body of water, the inlet (60) being permanently open, no closing valve or system being placed in the inlet (60), which remains clear.

2. The line according to claim 1, wherein the buffer space (29) has a constant volume.

3. The line according to claim 1, wherein the buffer space (29) has a variable volume.

4. The line according to claim 3, wherein the buffer space (29) is defined by a flexible wall (192) deformable by the liquid present in the buffer space (29) or in which the buffer space (29) is defined by a partition (182) movable under the effect of the liquid present in the buffer space (29).

5. The line according to any one of the preceding claims, wherein the buffer space (29) is defined by at least one metal element able to oxidize in the presence of water or in which the buffer space (29) contains a metal element able to oxidize in the presence of water.

6. The line according to any one of the preceding claims, comprising a central part (12) and end end-fittings (14) situated on either side of the central part (12).

7. The line according to claim 6, wherein the buffer space (29) is defined in at least one of the end-fittings (14) and/or around at least one of the end-fittings (14).

8. The line according to one of claims 6 or 7, wherein the buffer space (29) is positioned around the central part (12), outside the outer sleeve (22).

9. The line according to any one of the preceding claims, wherein the buffer space (29) includes at least one pipe forming at least one winding positioned around the end-fitting (14), in the end-fitting (14) and/or around the central part (12).

10. The line according to any one of the preceding claims, comprising at least one intermediate sleeve (212) positioned inside the outer sleeve (22), the annular space (26) being outwardly defined by the intermediate sleeve (212), the buffer space (29) being defined between the intermediate sleeve (212) and the outer sleeve (22), the buffer space (29) including at least one inlet (60) intended to emerge in the body of water, the inlet (60) being arranged through the outer sleeve (22), the line comprising advantageously at least one end-fitting (14), the annular space (26) being connected to the buffer space (29) through the end-fitting (14).

11. The line according to claim 10, wherein the annular space (26) is connected to the buffer space (29) through the intermediate sleeve (212).

12. The line according to any one of claims 10 to 11, wherein the minimum length separating the inlet (60) from the outlet is greater than the ratio of the variation of liquid volume in the annular space (26) during operation in the body of water to the volume per unit of length of the buffer space (29), taken along the line.

13. A method for placing a line in a body of water, comprising the following steps:
- providing a line according to any one of the preceding claims;
- submerging the line in a body of water;
- flooding the annular space (26) with a liquid, in particular water from the body of water, through the buffer space (29);
- varying the volume of the annular space (26) by circulating water between the annular space (26) and the buffer space (29).
